# EUROPÄISCHE PATENTSCHRIFT

(11) **EP 1 130 359 B1**
(45) Veröffentlichungstag und Bekanntmachung des Hinweises auf die Patenterteilung: **11.04.2007**
(21) Anmeldenummer: 01102547.5
(22) Anmeldetag: 06.02.2001
(51) Int. Cl.: G01C 21/34

(54) **Navigationsverfahren mit geringer Datenmenge**
Navigation method with reduced data volume
Méthode de navigation à quantité de données réduite

(30) Priorität: 03.03.2000 DE 10010608
(43) Veröffentlichungstag der Anmeldung: 05.09.2001
(73) Patentinhaber: SIEMENS AKTIENGESELLSCHAFT, 80333 München (DE)
(72) Erfinder: Tiede, Lutz, 93138 Lappersdorf (DE); Leimbach, Jürgen, 93055 Regensburg (DE)

(56) Entgegenhaltungen:
- EP-A- 0 836 074
- WO-A-99/09374
- DE-C2- 4 300 927

## Beschreibung

Die Erfindung betrifft ein Verfahren zur Zielführung mit einem Kraftfahrzeug-Navigationssystem.

Navigationssysteme werden in zunehmendem Maße für Neufahrzeuge oder als Nachrüstsysteme angeboten. Hierbei wird zwischen sogenannten On-Board und Off-Board Navigationssystemen unterschieden. Bei On-Board Navigationssystemen handelt es sich um weitgehend autonome Systeme, bei denen digitale Straßenkartendaten für die Routenberechnung im Fahrzeug mitgeführt werden und auch die Routenberechnung selbst durch das Steuergerät des Navigationssystems erfolgt. Im Gegensatz hierzu weisen Off-Board Navigationssysteme kein Speicherelement für großräumige Straßenkartendaten auf. Vielmehr wird bei diesen der Zielführungswunsch an eine Zentralstelle übermittelt, in der die digitale Straßenkarte abgespeichert ist. Daraufhin können Teile der digitalen Straßenkarte in das Kraftfahrzeug übertragen und dort eine Routenführung durchgeführt werden oder die Routenberechnung wird in der Zentralstelle durchgeführt und es werden Wegpunkte mit Zielführungshinweisen in das Fahrzeug übertragen. Die Übertragung erfolgt dabei zumeist über eine Mobilfunkverbindung, jedoch sind auch Bakensysteme bekannt.

Aus der DE 195 44 157 C2 ist ein Verfahren zur sicheren Zielführung eines Fahrzeuges bekannt, bei dem eine Fahrtroute in Form von aufeinanderfolgenden Wegpunkten bestimmt und dem Fahrer des Fahrzeugs in Form von Fahrhinweisen angezeigt wird. Bei diesem Verfahren wird die Ortsposition im Fahrzeug anhand von Signalen eines Satelliten-Navigationssystems (z.B. GPS-System) ermittelt und es erfolgt fortlaufend ein Vergleich zwischen dem Abstand der momentanen Ortsposition von dem Wegpunkt, den das Fahrzeug als nächsten auf seiner Fahrtroute passieren soll, und einem vorgegebenen Minimalwert. Die Erfassung der Ortsposition durch ein Satelliten-Navigationssystem ist gegenwärtig jedoch nur mit einer begrenzten Genauigkeit möglich. Hierdurch ergeben sich Unsicherheiten hinsichtlich der Annäherung an den nächsten Wegpunkt. Die Bestimmung der Ortsposition durch GPS-Navigation kann mit Hilfe von DGPS-Systemen zwar verbessert werden, jedoch handelt es sich hierbei um ein aufwendiges Verfahren. Zudem ist bei dem aus der DE 195 44 157 C2 bekannten Verfahren der Vergleich der Luftlinienentfernung zwischen der gegenwärtigen Ortsposition des Fahrzeuges und dem nächsten Wegpunkt abhängig von der speziellen Straßenführung unter Umständen, z.B. bei kurvenreichen Bergstrecken, sehr ungenau.

Aus der EP 0 674 007 B1 ist ein Fahrzeugnavigationssystem bekannt, bei dem die digitalen Straßenkartendaten im Fahrzeug selbst mitgeführt werden. Die Straßenkartendaten sind in vereinfachter Form als Knoten abgespeichert, wobei zu Knoten, die durch reale Straßen miteinander verbunden sind, zusätzlich die Entfernung zwischen diesen Knoten abgespeichert ist. Der genaue Straßenverlauf, wie er sonst üblicherweise bei On-Board Navigationssystemen in den Landkartendaten vorhanden ist, kann hier nicht nachvollzogen werden, jedoch ergibt sich ein deutlich verringerter Speicherbedarf.

Aus der WO 99/09374 ist ein Verfahren zur Zielführung mit einem Navigationssystem bekannt, wobei das Navigationssystem im Fahrzeug eine Steuereinheit, sowie eine mit der Steuereinheit verbundene Eingabeeinheit und Ausgabeeinheit, eine Wegstreckenmesseinrichtung sowie ein Kommunikationsgerät zur Kommunikation mit einer außerhalb des Fahrzeugs befindlichen Zentralstelle enthält, in der eine digitale Straßenkarte vorhanden ist. Anhand eines Start- und eines Zielortes wird eine Routenberechnung mit den Daten der digitalen Straßenkarte durchgeführt. Von der Zentralstelle werden Wegpunkte (nodes) sowie Routensegmente (links) zwischen den Wegpunkten an das Navigationssystem übermittelt. Die Bewegung des Fahrzeugs wird überwacht und bei Annäherung an einen nächsten Wegpunkt, an dem ein Abbiegevorgang erforderlich ist, wird ein Fahrhinweis ausgegeben. Die Bewegung des Fahrzeugs wird sowohl mittels GPS-Ortung als auch durch Koppelnavigation anhand der übertragenen Routensysteme zwischen den Wegpunkten überwacht.

Aufgabe der Erfindung ist es, ein Verfahren zur Zielführung mit einem Kraftfahrzeug-Navigationssystem anzugeben, das lediglich eine Übertragung einer nur geringen Datenmenge in das Kraftfahrzeug erfordert und gleichzeitig weiterhin eine ortsgenaue Ausgabe von Fahrhinweisen gewährleistet.

Die Aufgabe wird gelöst durch ein Verfahren zur Zielführung mit den Merkmalen des Anspruchs 1.

Das erfindungsgemäße Verfahren geht somit von einem Navigationssystem aus, bei dem im Fahrzeug selbst keine digitale Straßenkarte benötigt wird. Eine digitale Straßenkarte befindet sich in einer Zentralstelle, wobei es sich bei der Zentralstelle sowohl um eine solche handeln kann, auf die eine Vielzahl von Kraftfahrzeugführern Zugriff hat, als auch um einen heimischen PC mit einem Routenplanungsprogramm. In der Zentralstelle wird anhand des Start- und des Zielortes eine Routenberechnung mit den Daten der digitalen Straßenkarte durchgeführt. Das Ergebnis dieser Routenberechnung ist eine Liste mit charakteristischen Wegpunkten, an denen eine Straßenverzweigung vorliegt, sowie der jeweiligen Straßenentfernung zwischen benachbarten charakteristischen Wegpunkten auf der berechneten Route. Informationen über den genauen Straßenverlauf zwischen den charakteristischen Wegpunkten werden nicht benötigt. Die charakteristischen Wegpunkte werden zusammen mit den zugehörigen Straßenentfernungen in einem Speicherelement des Navigationssystems im Fahrzeug abgespeichert. Zur Bestimmung der Entfernung zum nächsten charakteristischen Wegpunkt wird ein Vergleich der seit dem letzten charakteristischen Wegpunkt zurückgelegten Wegstrecke und der abgespeicherten Entfernung zwischen dem letzten und dem nächsten Wegpunkt durchgeführt. Wird hierbei festgestellt, dass die Entfernung des Fahrzeugs zum nächsten Wegpunkt einen vorgegebenen Mindestwert erreicht, so wird der nächste Fahrhinweis ausgegeben.

Das erfindungsgemäße Verfahren kommt somit zum einen mit einer sehr geringen Datenmenge aus, die in das Fahrzeug übertragen werden muss, und kann zur Positionsbestimmung während der Fahrt auf ein Satelliten-Navigationssystem verzichten. Vielmehr wird die Position des Fahrzeuges im Bezug zum nächsten Wegpunkt alleine durch die Werte der Wegstreckenmesseinrichtung und dem Vergleich mit der abgespeicherten Straßenentfernung bestimmt.

Die in das Fahrzeug zu übertragende Datenmenge kann noch weiter reduziert werden, wenn nicht alle Wegpunkte der Route, an denen eine Straßenverzweigung vorliegt, in das Fahrzeug übertragen werden, sondern nur solche Wegpunkte, die auch Abbiegepunkte der berechneten Route sind. Bei dieser Ausführungsform werden somit diejenigen Wegpunkte nicht in das Fahrzeug übertragen, an denen zwar eine Straßenverzweigung vorliegt, die berechnete Route jedoch geradeaus weiterführt. Gerade in städtischen Gebieten mit sehr vielen von einer Hauptstraße abzweigenden Nebenstraßen kann dabei die Datenmenge deutlich reduziert werden.

In einer weiteren bevorzugten Ausführungsform ist vorgesehen, dass die Entfernung zum nächsten Abbiegepunkt im Fahrzeug ausgegeben wird. Diese Ausgabe kann bereits unmittelbar nach Beendigung eines Abbiegevorganges vorgenommen werden und somit bereits frühzeitig die Entfernung bis zum nächsten Abbiegepunkt anzeigen. Ein solches Verfahren ist insbesondere dann von Vorteil, wenn die einzelnen Abbiegepunkte relativ weit auseinander liegen. In diesem Fall kann durch die Anzeige der Entfernung dem Fahrer signalisiert werden, dass in Kürze kein weiterer Abbiegepunkt zu erwarten ist. Hierdurch kann ein entspannteres Fahren erzielt werden.

Die Route kann beispielsweise am heimischen PC berechnet werden und es erfolgt lediglich eine Datenübertragung in das Fahrzeug.

In einer speziellen Ausführungsform ist vorgesehen, dass der Start- und der Zielort vom Fahrzeug an die Zentralstelle übermittelt werden, die Routenberechnung außerhalb des Fahrzeugs erfolgt und anschließend die charakteristischen Wegpunkte in das Fahrzeug von der Zentralstelle übertragen werden. Besonders bevorzugt ist hierbei eine an sich bekannte Mobilfunkverbindung zu einer Zentralstelle. Der Startort kann hierbei ebenso wie der Zielort vom Fahrzeugführer direkt im Fahrzeug aus einer Liste ausgewählt werden.

In einer alternativen Ausführungsform hierzu ist vorgesehen, dass der Startort durch Satellitennavigation bestimmt wird. Hierdurch ist das Verfahren auch dann jederzeit einsetzbar, wenn dem Fahrer seine genaue Startposition unbekannt ist. Obwohl die Satellitennavigation auch zusätzlich zu dem Wegstrekkenmesser zur Bestimmung der Fahrzeugposition während der Fahrt eingesetzt werden kann, wird eine Ausführungsform bevorzugt, bei der der Wegstreckenmesser das einzige Mittel ist, dass zur Bestimmung der Entfernung bis zum nächsten Wegpunkt eingesetzt wird.

Für das erfindungsgemäße Verfahren ist die eindeutige Erkennung eines Abbiegevorgangs von wesentlicher Bedeutung. Die Annäherung an einen Abbiegepunkt wird durch den zuvor beschriebenen Wegstreckenvergleich erkannt. Um den Abbiegevorgang punktgenau erkennen zu können, weist das Navigationssystem vorzugsweise einen Richtungssensor auf. Durch Auswertung des Ausgangssignals des Richtungssensors kann ein Abbiegevorgang, der mit einer entsprechend großen Richtungsänderung verknüpft ist, sicher erkannt werden. Wird der Abbiegevorgang erkannt, so wird erneut die Wegstreckenzählung bis zum nächsten Abbiegepunkt gestartet.

Um auch bei unterschiedlichen Verkehrsbedingungen stets eine optimale Route zum Zielort zur Verfügung zu haben, werden bei der Routenberechnung vorzugsweise aktuelle Verkehrsinformationen berücksichtigt. Diese Verkehrsinformationen können beispielsweise in der Zentralstelle vorliegen. Die Verkehrsinformationen werden dann direkt bei der Routenanfrage berücksichtigt.

Um jedoch auch sich ändernde Verkehrsbedingungen bei der Zielführung berücksichtigen zu können, ist weiterhin vorgesehen, dass bei sich verändernder Verkehrslage die Wegpunkte und die Entfernungen zwischen den Wegpunkten durch eine Routenneuberechnung aktualisiert werden. Erfolgt die Verbindung zwischen dem Kraftfahrzeug und der Zentralstelle über eine Mobilfunkverbindung, so kann zur Berücksichtigung einer veränderter Verkehrslage beispielsweise automatisch von dem Kommunikationsgerät im Kraftfahrzeug in periodischen Abständen ein Verbindungsaufbau zur Zentralstelle durchgeführt und überprüft werden, ob neue Verkehrsinformationen vorliegen, die die geplante Route betreffen.

Da die komplette Routenberechnung in der Zentralstelle durchgeführt werden kann, kann jedoch auch die Route selbst in der Zentralstelle abgespeichert sein, sodass von der Zentralstelle anhand des Fahrtbeginns und der geplanten Route entschieden werden kann, ob eine neue Verkehrsinformation für das betreffende Fahrzeug von Bedeutung sein kann. Sollte dies der Fall sein, so kann auch von der Zentralstelle selbsttätig eine neue Verbindung zu dem Kraftfahrzeug hergestellt werden und eine neu berechnete Route mit den veränderten Wegpunkten in das Fahrzeug übertragen werden. Das Mobilfunktelefon im Kraftfahrzeug kann hierzu ständig über eine Kabelverbindung mit der Steuereinheit des Navigationssystems verbunden sein.

In einer besonderen Ausführungsform ist jedoch vorgesehen, dass die von dem Mobilfunkgerät empfangenen Daten über eine Kurzstreckenfunkverbindung in die Steuereinheit des Navigationssystems übertragen werden. Dies kann insbesondere nach dem an sich bekannten Bluetooth-Verfahren erfolgen. Das Mobilfunktelefon kann hierbei beispielsweise in einer Tasche im Fahrzeug verbleiben.

Die Fahrhinweise werden im Kraftfahrzeug vorzugsweise akustisch an den Fahrzeugführer ausgegeben. Um die Zahl der zusätzlich erforderlichen Komponenten im Kraftfahrzeug möglichst gering zu halten, kann dabei insbesondere das Lautsprechersystem eines im Fahrzeug ohnehin vorhandenen Audiosystems mitbenutzt werden.

Um eine sichere Zielführung zu erreichen, ist es von besonderer Bedeutung die Fahrhinweise rechtzeitig an den Fahrzeugführer auszugeben. Dabei kann insbesondere die Entfernung vor dem Abbiegepunkt, an der die Fahrhinweise ausgegeben werden, geschwindigkeitsabhängig sein, sodass die Fahrhinweise bei hoher Geschwindigkeit in einer größeren Entfernung zum Abbiegepunkt ausgegeben werden als bei kleinerer Geschwindigkeit.

Die Erfindung wird nachfolgend anhand eines Ausführungsbeispiels und der Zeichnung näher erläutert. Es zeigen.
- Fig. 1:: einen Straßenkartenausschnitt,
- Fig. 2:: die Komponenten eines Navigationssystems,
- Fig. 3:: ein Ablaufdiagramm des erfindungsgemäßen Verfahrens.

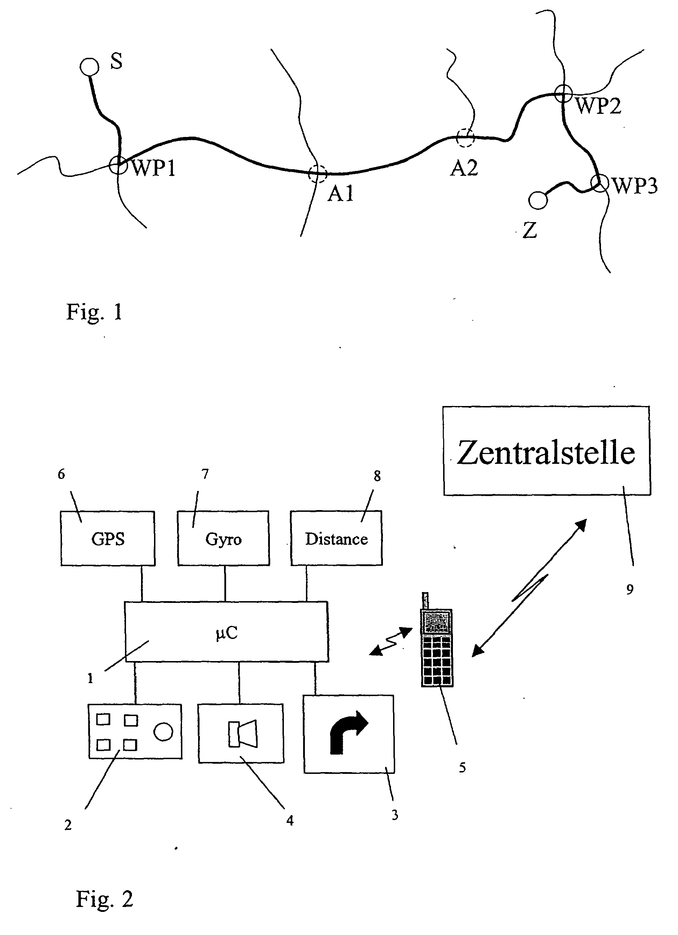

Figur 1 zeigt einen Straßenkartenausschnitt für eine Fahrt von einem Startort S zu einem Zielort Z. Die Route führt hierbei über die Wegpunkt WP1, A1, A2, WP2 und WP3 zum Ziel Z. An den Wegpunkten WP1, WP2 und WP3 sind Abbiegevorgänge vorzunehmen, während bei A1 und A2 die Fahrt ohne Abbiegevorgang weiterführt.

Figur 2 zeigt die wesentlichen Komponenten eines Navigationssystems zur Durchführung des erfindungsgemäßen Verfahrens. Zentraler Bestandteil des Navigationssystems im Fahrzeug ist die Steuereinheit 1. Mit der Steuereinheit 1 ist die Eingabeeinheit 2 verbunden, über die die Eingabe des Zielortes vorgenommen wird. Der Startort, der mit der gegenwärtigen Fahrzeugposition identisch ist, wird mittels eines GPS-Satellitenempfängers 6 ermittelt. Die Steuereinheit 1 beinhaltet eine Sende- und Empfangsstation für eine Kurzstreckenfunkverbindung zu einem Mobilfunktelefon 5. Über die Kurzstreckenfunkverbindung werden der Startort und der gewünschte Zielort an das Mobiltelefon 5 übertragen. Nach einer automatischen oder manuellen Anwahl einer Verbindung zu einer Zentralstelle 9 außerhalb des Fahrzeugs, in der eine digitale Straßenkarte abgespeichert ist, werden der Startort und der Zielort an die Zentralstelle 9 übertragen. In der Zentralstelle 9 wird nunmehr eine Routenberechnung durchgeführt, und es werden die Wegpunkte der Route bestimmt, an denen eine Straßenverzweigung vorliegt. Im Falle des Beispiels nach Fig. 1 sind dies die Wegpunkte WP1, A1, A2, WP2 und WP3. An den Wegpunkten A1 und A2 sind keine Abbiegevorgänge erforderlich, sodass diese Wegpunkte vorzugsweise aus der Routenliste gestrichen werden und nur die Abbiegepunkte WP1, WP2 und WP3 als charakteristische Wegpunkte verbleiben. Von der Zentralstelle 9 werden somit über die Mobilfunkeinheit 5 an die Steuereinheit 1 im Kraftfahrzeug die für die Routenführung an den Abbiegepunkten WP1, WP2 und WP3 erforderlichen Daten sowie die Entfernung zwischen benachbarten Abbiegepunkten übertragen. Das Navigationssystem im Fahrzeug weist weiterhin einen Wegstreckenmesser 8 und einen Richtungssensor 7 auf. Über den Richtungssensor 7 kann ein Abbiegevorgang an einem Abbiegepunkt ortsgenau registriert werden, sodass anschließend die Wegstreckenzählung bis zum nächsten Abbiegepunkt mit den Signalen des Wegstreckenmessers 8 neu erfolgen kann. Die Ausgabe von Zielführungshinweisen kann sowohl über eine optische Ausgabeeinheit 3 als auch über eine akustische Ausgabeeinheit 4 erfolgen.

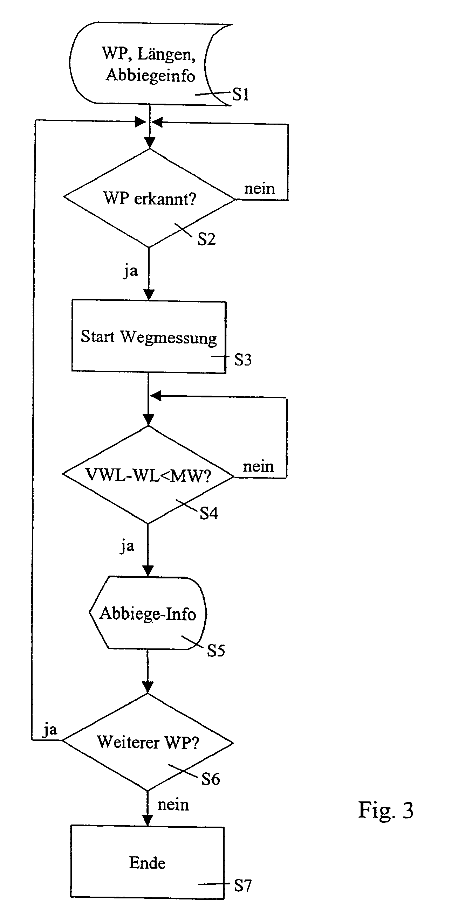

Das während der Fahrt ablaufende Verfahren wird nachfolgend anhand der Fig. 3 näher erläutert. Hierbei wird davon ausgegangen, dass die Informationen hinsichtlich der Abbiegepunkte WP1, WP2 und WP3 sowie der Straßenentfernung zwischen benachbarten Abbiegepunkten im Speicherelement der Steuereinheit 1 abgespeichert sind (Schritt S1). Für die nachfolgenden Erläuterungen wird weiterhin davon ausgegangen, dass sich das Fahrzeug unmittelbar in der Nähe eines Abbiegepunktes befindet. In Schritt S2 wird daher geprüft, ob der Abbiegepunkt mit Hilfe des Richtungssensors erkannt wurde. Ist dies der Fall, d. h. wurde der Abbiegevorgang vorgenommen, so startet die Wegmessung (Schritt S3). Anschließend wird ständig die Differenz zwischen der abgespeicherten Straßenentfernung VWL (Vorgabewert für die Weglänge) des gerade passierten Wegpunktes zum nächsten Wegpunkt und der seit dem letzten Wegpunkt gemessenen Weglänge WL gebildet. Diese Differenz wird mit einem Vorgabewert MW verglichen (Schritt S4). Ist die berechnete Differenz kleiner als der Vorgabewert, d. h. der Abstand des Fahrzeuges zum nächsten Wegpunkt unterschreitet den Vorgabewert, so wird anschließend in Schritt S5 die Information zu dem nächsten Abbiegevorgang ausgegeben. Anschließend wird in Schritt S6 geprüft, ob ein weiterer Wegpunkt vorliegt. Ist dies nicht der Fall, so wird das Verfahren beendet. Liegt ein weiterer Wegpunkt vor, so wird beginnend mit Schritt S2 erneut geprüft, ob der Wegpunkt, zu dem die im Schritt S5 gehörende Abbiegeinformation gehört, erkannt wurde und das Verfahren startet von neuem.

Auch unmittelbar nach dem Start am Startpunkt S wird eine Wegmessung gestartet um den charakteristischen Wegpunkt WP1 sicher erreichen zu können und die entsprechenden Abbiegeinformationen rechtzeitig auszugeben. Das in dieser Frühphase der Zielführung durchzuführende Verfahren unterscheidet sich von dem in Fig. 3 beschriebenen Verfahren lediglich dadurch, dass der Verfahrensschritt S2 entfallen kann, bzw. das Losfahren des Fahrzeuges als Erkennung des ersten Wegpunktes, der gleich dem Startpunkt S ist, anzusehen ist.

## Patentansprüche

1. Verfahren zur Zielführung mit einem Navigationssystem, das im Fahrzeug eine Steuereinheit (1), sowie eine mit der Steuereinheit (1) verbundene Eingabeeinheit (2) und Ausgabeeinheit (3, 4), eine Wegstreckenmesseinrichtung (8) sowie ein Kommunikationsgerät (Mobilfunktelefon 5) zur Kommunikation mit einer außerhalb des Fahrzeugs befindlichen Zentralstelle (9) enthält, in der eine digitale Straßenkarte vorhanden ist, wobei
- anhand eines Start- und eines Zielorts in der Zentralstelle eine Routenberechnung mit den Daten der digitalen Straßenkarte durchgeführt wird
- hinsichtlich der berechneten Route ausschließlich charakteristische Wegpunkte, an denen eine Straßenverzweigung vorliegt, sowie für die Routenführung an diesen Straßenverzweigungen erforderliche Daten und die Straßenentfernung zwischen benachbarten charakteristischen Wegpunkten der Route in das Fahrzeug übertragen werden und in einem Speicherelement im Fahrzeug abgespeichert werden,
- bei Erreichen eines charakteristischen Wegpunktes ein Wegstreckenvergleich zwischen der abgespeicherten Straßenentfernung vom erreichten Wegpunkt zum nächsten Wegpunkt und der vom erreichten Wegpunkt aus zurückgelegten Fahrstrecke gestartet wird und anschließend
- die Position des Fahrzeugs bezüglich des nächsten Wegpunktes auf der Route alleine durch Messwerte der Wegstreckenmesseinrichtung und einem Vergleich mit der abgespeicherten Straßenentfernung bestimmt wird,
- fortlaufend die Entfernung vom letzten erreichten Wegpunkt durch die Wegstreckenmesseinrichtung (8) des Fahrzeugs ermittelt wird und die so ermittelte Entfernung mit der abgespeicherten Entfernung zwischen dem zuletzt erreichten Wegpunkt und dem nächsten Wegpunkt der Route verglichen wird sowie
- bei Unterschreiten eines Mindestwertes für die Entfernung zum nächsten Wegpunkt ein Fahrhinweis ausgegeben wird.

2. Verfahren nach Anspruch 1, **dadurch gekennzeichnet, dass** die Wegpunkte ausschließlich Abbiegepunkte der berechneten Route sind.

3. Verfahren nach einem der vorhergehenden Ansprüche, **dadurch gekennzeichnet, dass** die Entfernung zum nächsten Abbiegepunkt ausgegeben wird.

4. Verfahren nach einem der vorhergehenden Ansprüche, **dadurch gekennzeichnet, dass** der Start- und der Zielort vom Fahrzeug an die Zentralstelle (9) übermittelt werden, die Routenberechnung außerhalb des Fahrzeugs erfolgt und die charakteristischen Wegpunkte in das Fahrzeug übertragen werden.

5. Verfahren nach einem der vorhergehenden Ansprüche, **dadurch gekennzeichnet, dass** die Ermittlung des Startortes durch Satellitennavigation erfolgt.

6. Verfahren nach einem der vorhergehenden Ansprüche, **dadurch gekennzeichnet, dass** die Erkennung eines Abbiegevorgangs an einem Wegpunkt mit Hilfe eines Richtungssensors (7) erfolgt.

7. Verfahren nach einem der vorhergehenden Ansprüche, **dadurch gekennzeichnet, dass** bei der Routenberechnung aktuelle Verkehrsinformationen berücksichtigt werden.

8. Verfahren nach einem der vorhergehenden Ansprüche, **dadurch gekennzeichnet, dass** die Wegpunkte und die Entfernungen zwischen den Wegpunkten bei sich verändernder Verkehrslage durch eine Routenneuberechnung aktualisiert werden.

9. Verfahren nach einem der vorhergehenden Ansprüche, **dadurch gekennzeichnet, dass** die Ausgabeeinrichtung Bestandteil eines Audiosystems ist.

10. Verfahren nach einem der vorhergehenden Ansprüche, **dadurch gekennzeichnet, dass** das Kommunikationsgerät (Mobilfunktelefon 5) die empfangenen Daten über eine Kurzstreckenfunkverbindung an die Steuereinheit (1) überträgt.

11. Verfahren nach einem der vorhergehenden Ansprüche, **dadurch gekennzeichnet, dass** der Mindestwert für die Entfernung, bei dessen Unterschreiten ein Fahrhinweis ausgegeben wird, geschwindigkeitsabhängig vorgegeben ist.

## Claims

1. Method of routing using a navigation system which contains, in the vehicle, a control unit (1) and also an input unit (2) and output unit (3, 4) which are connected to the control unit (1), an odometer (8) and also a communication appliance (mobile radio telephone 5) for communicating with a central station (9) which is located outside the vehicle and contains a digital road map, where
- a starting point and a destination are used to calculate a route in the central station using the data of the digital road map,
- in reference to the calculated route, exclusively characteristic road points, at which there is a road junction, and also data required for the routing at these road junctions and the road distance between adjacent characteristic road points on the route are transmitted to the vehicle and are stored in a memory element in the vehicle,
- on reaching a characteristic road point, a distance comparison between the stored road distance from the road point reached to the next road point and the distance traveled from the road point reached is started, and then
- the position of the vehicle in respect of the next road point on the route is determined only by measured values from the odometer and a comparison with the stored road distance,
- the distance from the last road point reached is continually ascertained by the odometer (8) in the vehicle, and the distance ascertained in this manner is compared with the stored distance between the last road point reached and the next road point on the route, and also
- if a minimum value for the distance from the next road point has not been reached, a driving instruction is output.

2. Method according to Claim 1, **characterized in that** the road points are exclusively turnoff points on the calculated route.

3. Method according to one of the preceding claims, **characterized in that** the distance from the next turnoff point is output.

4. Method according to one of the preceding claims, **characterized in that** the starting point and the destination are transmitted from the vehicle to the central station (9), the route is calculated outside the vehicle and the characteristic road points are transmitted to the vehicle.

5. Method according to one of the preceding claims, **characterized in that** the starting point is ascertained by satellite navigation.

6. Method according to one of the preceding claims, **characterized in that** a turnoff maneuver at a road point is recognized by means of a direction sensor (7).

7. Method according to one of the preceding claims, **characterized in that** current traffic information is taken into account for route calculation.

8. Method according to one of the preceding claims, **characterized in that** the road points and the distances between the road points are updated by route recalculation as the traffic situation changes.

9. Method according to one of the preceding claims, **characterized in that** the output device is part of an audio system.

10. Method according to one of the preceding claims, **characterized in that** the communication appliance (mobile radio telephone 5) transmits the received data to the control unit (1) over a short-haul radio link.

11. Method according to one of the preceding claims, **characterized in that** the minimum value for the distance at which a driving instruction is output when it has not been reached is prescribed depending on speed.

## Revendications

1. Procédé de pilotage vers la destination à l'aide d'un système de navigation, qui comprend, dans le véhicule, une unité de commande (1), ainsi qu'une unité de saisie (2) et une unité de sortie (3, 4) reliées à l'unité de commande (1), un dispositif de mesure du trajet parcouru (8), ainsi qu'un appareil de communication (téléphone en radio mobile 5) pour la communication avec une centrale (9) se trouvant à l'extérieur du véhicule et dans laquelle se trouve une carte routière numérisée, au cours duquel
- un calcul d'itinéraire est effectué dans la centrale, à l'aide d'un lieu de départ et d'un lieu de destination, avec les données de la carte routière numérisée,
- en ce qui concerne l'itinéraire calculé, seuls des points caractéristiques du parcours, auxquels il y a un embranchement de routes, ainsi que des données nécessaires pour le pilotage sur l'itinéraire à ces embranchements de routes et la distance routière entre points caractéristiques voisins du parcours sur l'itinéraire sont transmis au véhicule et mémorisés dans un élément de mémoire dans le véhicule,
- lorsqu'un point caractéristique du parcours est atteint, une comparaison des sections de trajet est effectuée entre la distance routière mémorisée séparant le point de référence du parcours atteint et le point de référence suivant du parcours et le trajet parcouru depuis le point de référence du parcours atteint et, ensuite,
- la position du véhicule par rapport au point de référence suivant sur l'itinéraire est déterminée seulement à l'aide de valeurs de mesure du dispositif de mesure du trajet et d'une comparaison avec la distance routière mémorisée,
- la distance du dernier point de référence du parcours atteint est déterminée en permanence à l'aide du dispositif de mesure du trajet (8) du véhicule et la distance ainsi déterminée est comparée à la distance mémorisée entre le point de référence du parcours atteint en dernier et le point de référence suivant de l'itinéraire, ainsi que,
- si une valeur minimum pour la distance jusqu'au point de référence suivant est dépassée vers le bas, une indication de conduite est éditée.

2. Procédé selon la revendication 1, **caractérisé par le fait que** les points de référence du parcours sont exclusivement des points de changement de direction de l'itinéraire calculé.

3. Procédé selon l'une des revendications précédentes, **caractérisé par le fait que** la distance jusqu'au prochain point de référence du parcours est éditée.

4. Procédé selon l'une des revendications précédentes, **caractérisé par le fait que** le lieu de départ et le lieu de destination du véhicule sont transmis à la centrale (9), que le calcul de l'itinéraire est fait à l'extérieur du véhicule et que les points caractéristiques du parcours sont transmis au véhicule.

5. Procédé selon l'une des revendications précédentes, **caractérisé par le fait que** la détermination du lieu de départ est faite par navigation par satellites.

6. Procédé selon l'une des revendications précédentes, **caractérisé par le fait que** la reconnaissance d'un processus de changement de direction à un point de référence du parcours est faite à l'aide d'un détecteur de direction (7).

7. Procédé selon l'une des revendications précédentes, **caractérisé par le fait que**, pour le calcul de l'itinéraire, on tient compte d'informations actuelles relatives au trafic routier.

8. Procédé selon l'une des revendications précédentes, **caractérisé par le fait que** les points de référence du parcours et les distances entre les points de référence du parcours sont actualisés par un nouveau calcul de l'itinéraire si la situation du trafic change.

9. Procédé selon l'une des revendications précédentes, **caractérisé par le fait que** le dispositif d'édition fait partie d'un système de sonorisation.

10. Procédé selon l'une des revendications précédentes, **caractérisé par le fait que** l'appareil de communication (téléphone par radio mobile 5), transmet les données reçues, par l'intermédiaire d'une liaison radio à courte distance, à l'unité de commande.

11. Procédé selon l'une des revendications précédentes, **caractérisé par le fait que** la distance minimum, à laquelle une indication de conduite est émise, est prédéterminée en fonction de la vitesse.
